# EUROPEAN PATENT APPLICATION

(11) **EP 4 277 119 A1**
(43) Date of publication of application: **15.11.2023**
(21) Application number: 23722805.1
(22) Date of filing: 27.03.2023
(51) Int. Cl.: H02S 20/30

(54) **BRACKET SYSTEM FOR PHOTOVOLTAIC MODULE**

(30) Priority: 28.03.2022 CN 202210312948
(71) Applicant: Hengdian Group DMEGC Magnetics Co., Ltd., Jinhua, Zhejiang 322118 (CN); Jiangsu Dongci New Energy Technology Co., Ltd, Suqian, Jiangsu 223907 (CN)
(72) Inventor: LOU, Caoxin, Zhejiang 322118 (CN); GUO, Shuai, Zhejiang 322118 (CN); WU, Yuche, Zhejiang 322118 (CN); WANG, Tingting, Zhejiang 322118 (CN); ZHAO, Jing, Zhejiang 322118 (CN)
(74) Representative: HGF
(86) International application number: PCT/CN2023/084135
(87) International publication number: WO 2023/185751

(57) **Abstract**

Provided is a photovoltaic assembly support system. The photovoltaic assembly support system mainly includes a support body, a lower connecting member and an upper connecting member. Multiple lower connecting members are provided, and are arranged on the support body. The upper connecting member includes a first position-limiting groove and a second position-limiting groove, and a photovoltaic assembly body may be clamped between the first position-limiting groove and the lower connecting members; and/or the photovoltaic assembly body may be clamped between the second position-limiting groove and the lower connecting members.

## Description

The present disclosure claims priority to Chinese Patent Application No. 202210312948.5, filed with the China National Intellectual Property Administration (CNIPA) on Mar. 28, 2022, the disclosure of which is incorporated herein by reference in its entirety.

### TECHNICAL FIELD

The present application relates to the technical field of photovoltaic assemblies, for example, to a photovoltaic assembly support system.

### BACKGROUND

With the development of economy and the progress of science and technology, the solar energy, as one of clean energy sources, is widely used, and photovoltaic assemblies are continuously favored currently as one of core products for utilizing the solar energy. The photovoltaic assembly is typically mounted on a support system to allow the support system to support the photovoltaic assembly, so as to enable the photovoltaic assembly to be at a certain angle with respect to the ground or a roof plane, and to increase the area of the photovoltaic assembly directly irradiated by the sunlight and improve the efficiency of power generation.

When the support system in the related art supports the photovoltaic assembly, it is required to additionally use an upright post to support the photovoltaic assembly, which further increases the processing and manufacturing cost of the photovoltaic assembly support system, and reduces the assembly efficiency. Moreover, the distance between two adjacent track supports in the support system cannot be adjusted, that is, the distance between two track supports is equal to the length of the photovoltaic assembly, so that the photovoltaic assembly is apt to be obviously bent and deformed when being subjected to a large mechanical load, and may be damaged when in a severe case.

### SUMMARY

A photovoltaic assembly support system is provided according to the present application, the photovoltaic assembly support system has a simple structure, is easy to assemble and disassemble, and does not require an additional supporting component such as an upright post, thereby reducing the installation difficulty, saving the manufacturing cost, and improving the working efficiency of installing a photovoltaic assembly body.

A photovoltaic assembly support system is provided according to the present application. The photovoltaic assembly support system is configured to support a photovoltaic assembly body. The photovoltaic assembly support system includes a support body, multiple lower connecting members, and an upper connecting member. The multiple lower connecting members are arranged on the support body. The upper connecting member includes a first position-limiting groove and a second position-limiting groove, the first position-limiting groove and the multiple lower connecting members are arranged to enable the photovoltaic assembly body to be clamped between the first position-limiting groove and the multiple lower connecting members, and/or the second position-limiting groove and the multiple lower connecting members are arranged to enable the photovoltaic assembly body to be clamped between the second position-limiting groove and the multiple lower connecting members.

### BRIEF DESCRIPTION OF DRAWINGS

The drawings that are required to be used in the description of embodiments of the present application are described hereinafter, and the drawings in the following description merely depict some embodiments of the present application, and other drawings may also be obtained on the basis of the contents of the embodiments of the present application and these drawings by the person of ordinary skill in the art without making creative efforts.
FIG. 1 is a schematic structural diagram of a photovoltaic assembly support system according to an embodiment of the present application;
FIG. 2 is a schematic structural diagram of a photovoltaic assembly support system according to an embodiment of the present application in another view angle;
FIG. 3 is a schematic structural diagram of a character " 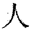 "-shaped photovoltaic assembly bodies according to an embodiment of the present application;
FIG. 4 is a schematic structural diagram of a character "⁻"-shaped photovoltaic assembly body according to an embodiment of the present application;
FIG. 5 is a schematic structural diagram of a support body according to an embodiment of the present application;
FIG. 6 is a schematic structural diagram of two support bodies in connection with each other according to an embodiment of the present application;
FIG. 7 is a partially enlarged view of B of FIG. 6;
FIG. 8 is another schematic structural diagram of a support body according to an embodiment of the present application;
FIG. 9 is a partially enlarged view of A of FIG. 1; and
FIG. 10 is a schematic structural diagram of an upper connecting member according to an embodiment of the present application.

### Reference numerals list

- 100: photovoltaic assembly body
- 110: upper frame
- 120: lower frame
- 200: support body
- 210: first connecting portion
- 220: second connecting portion
- 2210: first barb structure
- 230: third connecting portion
- 2310: second barb structure
- 250: buffer adhesive tape
- 260: broken line-shaped hole
- 300: upper connecting member
- 310: first position-limiting groove
- 320: second position-limiting groove
- 330: upper position-limiting portion
- 400: lower connecting member
- 410: third position-limiting groove
- 420: engaging hook
- 430: lower position-limiting portion
- 440: first through hole
- 450: opening
- 500: side baffle plate
- 600: supporting member
- 700: second fixing member
- 710: gasket
- 800: counterweight block
- 810: counterweight groove

### DETAILED DESCRIPTION

In the description of the present application, unless otherwise expressly specified and limited, the term "connected to each other", "connected", or "fixed" is to be construed in a broad sense, for example, as securely connected, detachably connected, or integrated; mechanically connected or electrically connected; directly connected to each other, indirectly connected to each other via an intermediary, internal connection between two components, or interaction between two components. For those of ordinary skill in the art, specific meanings of the preceding terms in the present application may be understood based on specific situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature therebetween. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

In the description of this embodiment, the orientational or positional relationships indicated by terms "above", "below", "left", "right", and the like are based on the orientational or positional relationships shown in the drawings, and are merely for ease of description and simplifying an operation, rather than indicating or implying that the referred device or element must have a specific orientation and be constructed and operated in a specific orientation. Moreover, the terms "first" and "second" are used only to distinguish between descriptions and have no special meaning.

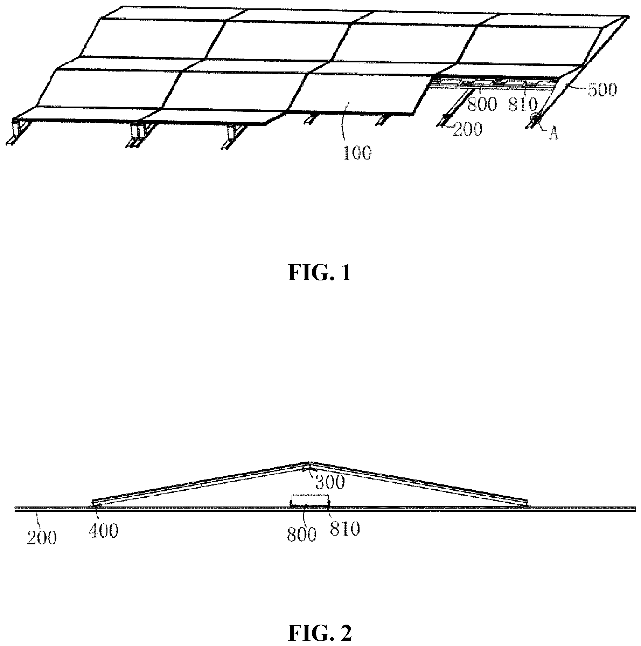

As shown in FIG. 1 to FIG. 4, a photovoltaic assembly support system is provided according to this embodiment, for supporting a photovoltaic assembly body 100. The photovoltaic assembly support system mainly includes a support body 200, a lower connecting member 400 and an upper connecting member 300. Multiple lower connecting members 400 are provided, and the multiple lower connecting members 400 are arranged on the support body 200. The upper connecting member 300 includes a first position-limiting groove 310 and a second position-limiting groove 320, and the first position-limiting groove 310 and the lower connecting members 400 are arranged to enable the photovoltaic assembly body 100 to be clamped between the first position-limiting groove 310 and the lower connecting members 400, and/or the second position-limiting groove 320 and the lower connecting members 400 are arranged to enable the photovoltaic assembly body 100 to be clamped between the second position-limiting groove 320 and the lower connecting members 400. For example, in a case where photovoltaic assembly bodies 100 are required to be arranged in rows of odd number, the operator may clamp the photovoltaic assembly bodies 100 between the first position-limiting grooves 310 and the lower connecting members 400, or clamp the photovoltaic assembly bodies 100 between the second position-limiting grooves 320 and the lower connecting members 400, so that each row of photovoltaic assembly bodies 100 forms a character "⁻"-shaped structure. In a case where photovoltaic assembly bodies 100 need to be arranged in rows of even number, the operator may clamp columns of the even number of photovoltaic assembly bodies 100 between the first position-limiting grooves 310 and the lower connecting members 400 and between the second position-limiting grooves 320 and the lower connecting members 400, respectively, so that each two rows of photovoltaic assembly bodies 100 form a character "A" -shaped structure, thereby improving the flexibility and applicability of the photovoltaic assembly support system.

Exemplarily, multiple support bodies 200, multiple lower connecting members 400, and multiple upper connecting members 300 in this embodiment may be provided, and the operator may adjust distances between the multiple support bodies 200 according to practical requirements, thereby improving the stability and reliability of the photovoltaic assembly bodies 100, so that the photovoltaic assembly bodies 100 are not apt to be severely deformed when subjected to a large mechanical load. In an embodiment, a distance between the support body 200 and a short side of the photovoltaic assembly body 100 ranges from one fourth to one fifth of a long side of the photovoltaic assembly body 100. It is worth noting that at two ends of a column of photovoltaic assembly bodies 100, two support bodies 200 are flush with the short sides of the photovoltaic assembly bodies 100, in this way, the photovoltaic assembly bodies 100 are prevented from injuring the operator due to protruding from the support body 200, and moreover, the aesthetics of the whole photovoltaic assembly system can be improved.

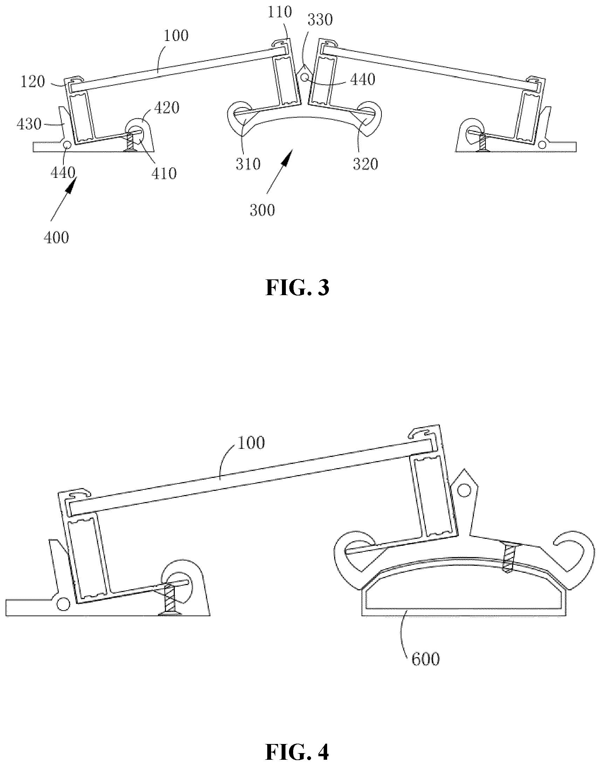

As shown in FIG. 4, in the case where the operator needs to arrange the photovoltaic assembly bodies 100 into the character "⁻"-shaped structure, since a level at which each upper connecting member 300 is located is higher than a lever at which the lower connecting members 400 are located, it is simply required to add one supporting member 600 for supporting the upper connecting member 300 below each upper connecting member 300, thereby achieving the installation of the character "⁻"-shaped structure of the photovoltaic assembly bodies 100, and further improving the stability and reliability of the photovoltaic assembly support system.

It should be noted that, as shown in FIG. 3 and FIG. 4, the photovoltaic assembly body 100 in this embodiment includes a photovoltaic assembly panel, an upper frame 110 and a lower frame 120. The photovoltaic assembly panel is embedded between the upper frame 110 and the lower frame 120, and the upper frame 110 is arranged to be engaged by the upper connecting member 300, and the lower frame 120 is arranged to be engaged by the lower connecting members 400, thereby achieving the stable connection between the photovoltaic assembly body 100 and the photovoltaic assembly support system.

Optionally, the support body 200, the lower connecting members 400 and the upper connecting member 300 in this embodiment are made of an aluminum alloy material that is light in weight and has a certain rigidity. Apparently, in other embodiments of the present application, the operator may also select other materials for processing, such as engineering plastics, copper alloys, and stainless steels.

Compared with the related art, the photovoltaic assembly support system provided in this embodiment has a simple structure, and does not need to use an additional supporting component such as an upright post, and the supporting to the photovoltaic assembly body 100 may be achieved simply through the cooperation of the upper connecting member 300, the lower connecting members 400 and the support body 200, thereby saving the manufacturing cost and improving the working efficiency of manufacturing and installing the photovoltaic assembly support system. Moreover, the support body 200 is not affected by the supporting component such as an upright post, and the distance between the support bodies 200 may be adjusted according to the practical carrying capacity of the photovoltaic assembly body 100, thereby improving the mechanical loading capacity of the photovoltaic assembly body 100 and prolonging the service life.

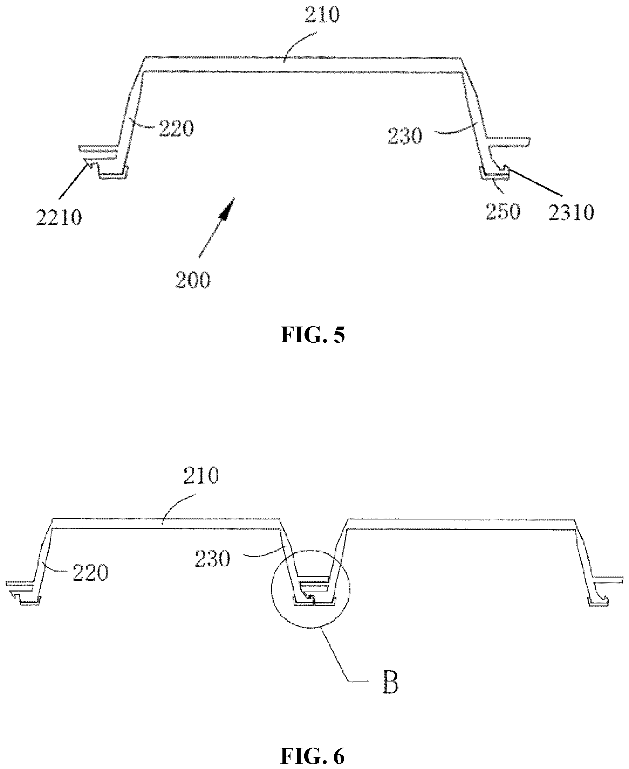

As shown in FIG. 5, in this embodiment, the support body 200 includes a first connecting portion 210, a second connecting portion 220 and a third connecting portion 230. The second connecting portion 220 is formed by extending from a first end of the first connecting portion 210, and the third connecting portion 230 is formed by extending from a second end of the first connecting portion 210, that is, the first connecting portion 210, the second connecting portion 220 and the third connecting portion 230 are integrally formed.

The second connecting portion 220 and the third connecting portion 230 are arranged in a shape of character "A", in this way, the stability of the support body 200 can be improved, and the photovoltaic assembly body 100 is prevented from being wobbled.

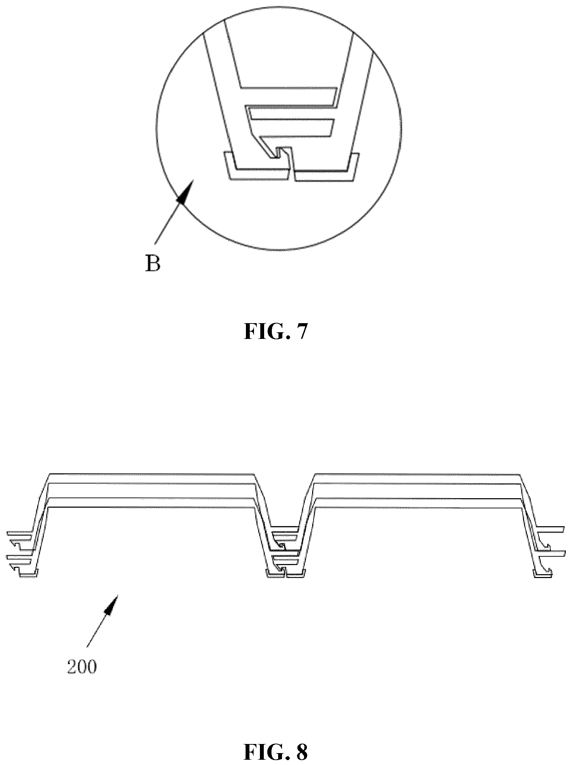

In an embodiment, as shown in FIG. 6 and FIG. 7, an end of the second connecting portion 220 facing away from the first connecting portion 210 is provided with a first barb structure 2210, and an end of the third connecting portion 230 facing away from the first connecting portion 210 is provided with a second barb structure 2310, and the first barb structure 2210 may be engaged and fitted with the second barb structure 2310. In this way, two support bodies 200 may be engaged by the first barb structure 2210 and the second barb structure 2310, and further the support bodies 200 may be widened, so that the photovoltaic assembly support system can carry the photovoltaic assembly bodies 100 of different sizes, that is, the operator can more flexibly match the support bodies 200 in the application environment, thereby avoiding insufficient or excessive loading capacity of the support bodies 200.

As shown in FIG. 6 and FIG. 7, in this embodiment, the first barb structure 2210 and the second barb structure 2310 are designed in a form of "single straight buckle", and further, the first barb structure 2210 and the second barb structure 2310 are engaged so as to achieve the stable connection of two adjacent support bodies 200. In other embodiments of the present application, the operator can design, according to practical requirements, the first barb structure 2210 and the second barb structure 2310 as other forms such as "single oblique buckle", "multiple straight buckles" and "spin buckle".

In an embodiment, as shown in FIG. 5, at each of the end of the second connecting portion 220 facing away from the first connecting portion 210 and the end of the third connecting portion 230 facing away from the first connecting portion 210, a buffer adhesive tape 250 is provided, the buffer adhesive tape 250 can reduce the rigidity of contact of the support body 200 with an application environment such as a floor or a roof plane, thereby prolonging the service life of the support body 200. Optionally, the buffer adhesive tape 250 is made of a silica gel material.

As shown in FIG. 8, the support bodies 200 may be connected in a vertical stacking combination manner. In a practical application, since the length of a single support body 200 is limited, a situation often occurs that the length of one support body 200 is not sufficient and thus it is required to splice the support bodies 200. In the related art, it is generally necessary to splice and fix two support bodies 200 along a length direction of the support bodies 200 by snap-fit members or a fastener. The structure of the support body 200 in this embodiment is large at the bottom and small at the top, i.e., a positive trapezoidal structure, in this way, the support bodies 200 can be spliced and simply need to be fixed. This stacking manner of the support bodies 200 may also be applied to a practical situation that there are fluctuating planes at different levels on the plane of the installation environment, thereby improving the flexible applicability and versatility of the support body 200 and the universality of the photovoltaic assembly support system.

As shown in FIG. 3, FIG. 4 and FIG. 10, in this embodiment, each of the lower connecting members 400 includes a third position-limiting groove 410, and the third position-limiting groove 410 is configured to engage the photovoltaic assembly body 100. In an embodiment, the upper connecting member 300 and the lower connecting members 400 are each provided with an engaging hook 420, and the engaging hook 420 is configured to engage the photovoltaic assembly body 100. That is, in this embodiment, an end of the first position-limiting groove 310, an end of the second position-limiting groove 320, and an end of the third position-limiting groove 410 are each extended outward to form the engaging hook 420, and the engaging hooks 420 may engage the upper frame 110 and the lower frame 120 of the photovoltaic assembly bodies 100, this engagement is an interference fit, thereby improving the stability and reliability of the connection between the photovoltaic assembly body 100 and the photovoltaic assembly support system.

In an embodiment, with continued reference to FIG. 3, FIG. 4 and FIG. 10, the lower connecting member 400 includes a lower position-limiting portion 430, and the upper connecting member 300 includes an upper position-limiting portion 330, the upper position-limiting portion 330 and the lower position-limiting portion 430 each abut against a side wall of the photovoltaic assembly body 100, so that the upper position-limiting portion 330 and the lower position-limiting portion 430 can have a certain limiting effect on the photovoltaic assembly body 100, that is, can limit the displacement of the photovoltaic assembly body 100, prevent the photovoltaic assembly body 100 from being separated from the photovoltaic assembly support system, thereby improving the stability and reliability of the photovoltaic assembly body 100.

As shown in FIG. 1, in this embodiment, the photovoltaic assembly support system includes a side baffle plate 500 and first fixing members, the upper connecting member 300 and each of the lower connecting members 400 are each provided with a first through hole 440, the side baffle plate 500 is provided with second through holes, and each of the first fixing members is arranged to partially pass through one of the second through holes to be connected to a respect one of the first through holes 440 of the upper connecting member 300 and the lower connecting members 400.

Exemplarily, the first fixing member may be selected from parts such as a bolt, a screw, a threaded rod and a rivet. The stable connection of the side baffle plate 500 to the upper connecting member 300 and the lower connecting member 400 is achieved by the first fixing members, so that the side baffle plate 500, the photovoltaic assembly body 100, the floor or the roof plane may be arranged to define a relatively closed space, whereby litters or foreign matters can be prevented from entering the underside of the photovoltaic assembly body 100, and furthermore, the photovoltaic assembly body 100 can be prevented from being subjected to the wind pressure from bottom to top along the lower surface to the upper surface of the photovoltaic assembly body 100, thereby preventing the photovoltaic assembly body 100 from being wobbled during use, and further, improving the stability of the photovoltaic assembly body 100 and the photovoltaic assembly support system.

In order to save the cost and reduce the weight of the photovoltaic assembly system, in this embodiment, the side baffle plate 500 is arranged only at the photovoltaic assembly panel at an edge position of the whole photovoltaic system. The photovoltaic assembly panels at a middle position does not need to be connected by the side baffle plate 500, so that the upper connecting members 300 and the lower connecting members 400 at the middle position may have their positions flexibly and freely adjusted according to the stress conditions of the photovoltaic assembly panels, thereby improving the working efficiency of assembling the upper connecting members 300 and the lower connecting members 400.

As shown in FIG. 1, in this embodiment, the photovoltaic assembly support system further includes a counterweight block 800 and a counterweight groove 810. The counterweight block 800 is placed in the counterweight groove 810, and the counterweight groove 810 is arranged in the support body 200, which enables the counterweight block 800 to improve the weight and stability of the photovoltaic assembly support system, thereby avoiding the risk of displacement or release of the photovoltaic assembly support system in a severe weather such as a strong wind. The number of counterweight blocks 800 and positions of the counterweight blocks 800 may be flexibly set by the operator according to practical conditions, for example, the number of counterweight blocks 800 may be one, three, five, and the like, and the counterweight blocks 800 may be arranged in the counterweight groove 810 at equal intervals, or may be arranged in the counterweight groove 810 at unequal intervals.

Apparently, according to the practical installation environment of the photovoltaic assembly body 100, the support body 200 may be removed by the operator and replaced with multiple discrete cement pier structures by the operator, and then the photovoltaic assembly body 100 is fixed on the cement pier structures. Such structure maximizes the effect of the cement pier structures, that is, the cement pier structures not only have the function of the counterweight block 800, i.e., increasing the weight and stability of the photovoltaic assembly support system, but also may function to support the photovoltaic assembly body 100, thereby saving the cost, reducing the installation process, and improving the installation efficiency.

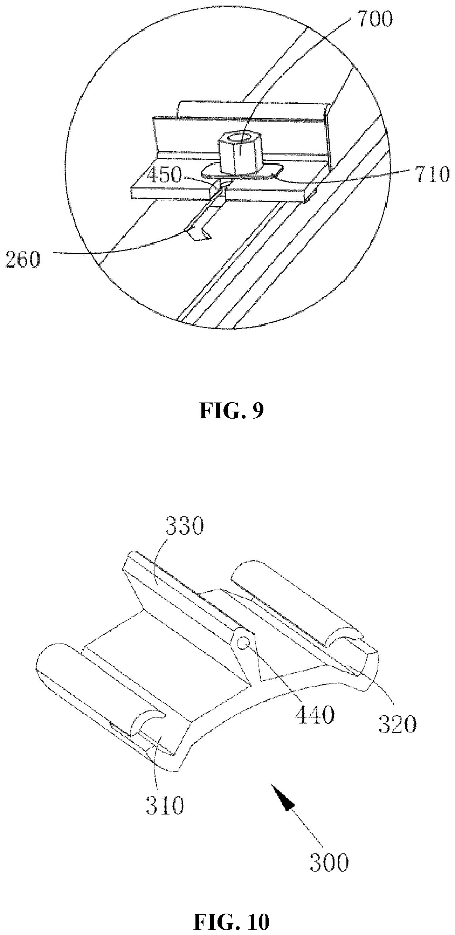

As shown in FIG. 1 and FIG. 9, in this embodiment, the photovoltaic assembly support system includes a second fixing member 700, and the second fixing member 700 is arranged to connect one of the lower connecting members 400 to the support body 200. The second fixing member 700 may be selected from parts such as a bolt, a screw, a threaded rod and a rivet, and the second fixing member 700 may be configured in a structure such as a round table, and a square table. The support body 200 is provided with a broken line-shaped hole 260, the lower connecting member 400 is provided with an opening 450, and the second fixing member 700 is arranged to partially pass through the opening 450 and the broken line-shaped hole 260 to connect the lower connecting member 400 to the support body 200. When to mount the lower connecting member 400, the lower connecting member 400 is firstly placed on the support body 200, and the second fixing member 700 to be mounted is partially passed through the broken line-shaped hole 260 and is located at the end of the broken line-shaped hole 260, and in this case, the second fixing member 700 is facing away from the photovoltaic assembly panel. That is, in this case, the lower connecting member 400 is movable freely on the support body 200, and then assembling steps such as position adjustment and cable laying out are conveniently performed. After the cable laying out is completed, the second fixing member 700 is slid into the opening 450 of the lower connecting member 400 along the broken line-shaped hole 260, and then the lower connecting member 400 and the support body 200 can be stably connected to each other by tightening the second fixing member 700. Moreover, an electrically conductive cable is arranged to pass through the broken line-shaped hole 260, so that the static electricity in the photovoltaic assembly panel may be led out to the earth in time, and furthermore, the danger of electric shock of the operator can be avoided, and the lightning protection effect can also be achieved in a thunderstorm weather.

In an embodiment, a gasket 710 is disposed on the second fixing member 700, and the gasket 710 is sleeved on the second fixing member 700. The gasket 710 is made of a flexible material such as silica gel, and the gasket 710 can reduce the rigidity of contact between the support body 200 and the lower connecting member 400, and further, better protect the photovoltaic assembly support system, and prolong the service life.

It should be noted that in the description of this specification, the terms "some embodiments" and "other embodiments" herein mean that specific features, specific structures, specific materials, or specific characteristics described in connection with an embodiment or example are included in at least one embodiment or example of the present application. In this description, illustrative expressions of these terms do not necessarily refer to the same embodiment or example. Moreover, the specific features, the specific structures, the specific materials, or the specific characteristics described may be combined in any one or more embodiments or examples in any suitable manner.

## Claims

1. A photovoltaic assembly support system, configured to support a photovoltaic assembly body (100) and comprising:
a support body (200);
a plurality of lower connecting members (400), wherein the plurality of lower connecting members (400) are arranged on the support body (200); and
an upper connecting member (300), wherein the upper connecting member (300) comprises a first position-limiting groove (310) and a second position-limiting groove (320), the first position-limiting groove (310) and the plurality of lower connecting members (400) are arranged to enable the photovoltaic assembly body (100) to be clamped between the first position-limiting groove (310) and the plurality of lower connecting members (400); and/or the second position-limiting groove (320) and the plurality of lower connecting members (400) are arranged to enable the photovoltaic assembly body (100) to be clamped between the second position-limiting groove (320) and the plurality of lower connecting members (400).

2. The photovoltaic assembly support system of claim 1, wherein the support body (200) comprises a first connecting portion (210), a second connecting portion (220) and a third connecting portion (230), the second connecting portion (220) is formed by extending from a first end of the first connecting portion (210), the third connecting portion (230) is formed by extending from a second end of the first connecting portion (210), and the second connecting portion (220) and the third connecting portion (230) are arranged in a shape of character "A".

3. The photovoltaic assembly support system of claim 2, wherein an end of the second connecting portion (220) facing away from the first connecting portion (210) is provided with a first barb structure (2210), an end of the third connecting portion (230) facing away from the first connecting portion (210) is provided with a second barb structure (2310), and the first barb structure (2210) is fitted with the second barb structure (2310).

4. The photovoltaic assembly support system of claim 3, wherein a buffer adhesive tape (250) is provided at each of the end of the second connecting portion (220) facing away from the first connecting portion (210) and the end of the third connecting portion (230) facing away from the first connecting portion (210).

5. The photovoltaic assembly support system of claim 1, wherein each of the plurality of lower connecting members (400) comprises a third position-limiting groove (410), and the third position-limiting groove (410) is configured to engage the photovoltaic assembly body (100).

6. The photovoltaic assembly support system of claim 5, wherein an end of the first position-limiting groove (310), an end of the second position-limiting groove (320) and an end of the third position-limiting groove (410) are each extended to form an engaging hook (420), and the engaging hook (420) is configured to engage the photovoltaic assembly body (100).

7. The photovoltaic assembly support system of claim 6, wherein each of the plurality of lower connecting members (400) comprises a lower position-limiting portion (430), the upper connecting member (300) comprises an upper position-limiting portion (330), and the upper position-limiting portion (330) and the lower position-limiting portion (430) each abut against a side wall of the photovoltaic assembly body (100).

8. The photovoltaic assembly support system of claim 1, comprising a side baffle plate (500) and first fixing members, wherein the upper connecting member (300) and each of the plurality of lower connecting members (400) are each provided with a first through hole (440), the side baffle plate (500) is provided with second through holes, and each of the first fixing members is arranged to partially pass through one of the second through holes to be connected to a respective one of first through holes (440) of the upper connecting member (300) and the plurality of lower connecting members (400).

9. The photovoltaic assembly support system of claim 1, comprising a second fixing member (700), wherein the second fixing member (700) is configured to connect a lower connecting member (400) of the plurality of lower connecting members (400) to the support body (200).

10. The photovoltaic assembly support system of claim 9, wherein the support body (200) is provided with a broken line-shaped hole (260), each of the plurality of lower connecting members (400) is provided with an opening (450), and the second fixing member (700) is arranged to partially pass through the opening (450) and the broken line-shaped hole (260) to connect the lower connecting member (400) to the support body (200).
